# EUROPEAN PATENT APPLICATION

(11) **EP 2 415 852 A1**
(43) Date of publication of application: **08.02.2012**
(21) Application number: 10758453.4
(22) Date of filing: 19.03.2010
(51) Int. Cl.: C10L 5/44, B09B 3/00, C10B 53/02

(54) **BIOCOKE MANUFACTURING METHOD AND MANUFACTURING DEVICE**

(30) Priority: 31.03.2009 JP 2009083887
(71) Applicant: Kinki University, Higashi-Osaka-shi Osaka 577-8502 (JP); Naniwa Roki Co., Ltd., Yao-shi, Osaka 581-0851 (JP)
(72) Inventor: IDA, Tamio, Higashi-Osaka-shi Osaka 577-8502 (JP); KAWAMI, Yoshimasa, Yao-shi Osaka 581-0851 (JP); SATOU, Jun, Yokohama-shi Kanagawa 236-8515 (JP)
(74) Representative: Collin, Jérôme
(86) International application number: PCT/JP2010/054821
(87) International publication number: WO 2010/113679

(57) **Abstract**

It is intended to provide biocokes producing method and apparatus which can produce biocokes efficiently and in a short amount of time. A method of producing biocokes in which pulverized biomass is fed and pressed in a reaction container, the pulverized biomass in a substantially-packed state is pressure-formed while being heated in a temperature range and a pressure range to obtain a semi-carbonized solid matter or pre-semi-carbonized solid matter and then cooled to produce biocoke. The method may include, but is not limited to: a filling step having the substeps of: feeding the pulverized biomass to the reaction container, and then pressing the pulverized biomass in the reaction container by lowering a pressurizing member from above the reaction container at a pressure lower than the pressure range; a reaction step having the substeps of: pressurizing the pulverized biomass in the pressure range by increasing a pressure of the pressurizing member to the pressure range; heating the pulverized biomass by means of a heating device to the temperature range and keeping such state for a prescribed period of time to form a shaped matter of the pulverized biomass in the reaction container, and then cooling the shaped matter by switching from the heating device to a cooling device; and an ejecting step having the substeps of: reducing the pressure of the pressurizing member, and then releasing the bottom part of the reaction container to eject the shaped matter having been cooled.

## Description

### [Technical Field]

The present invention relates to the field of producing biocokes using biomass as a raw material, and particularly to a biocoke producing method and a biocoke producing apparatus, which enable industrial mass production of bio-cokes which can be used as substitute fuel for coal cokes.

### [Background Art]

In view of global worming, reduction of CO₂ emission is promoted. Especially, in a steel industry, coal cokes which are fossil fuels are used as fuel and reducing agents at combustion facilities like a Cupola furnace and a power furnace. At combustion facilities like power boiler, fossil fuels such as coal and heavy oil are often used as fuel. However, these fossil fuels are a cause of global warming from a perspective of CO₂ emission, and thus the use thereof is becoming more regulated in the view of protecting the global environment. Also from a perspective of fossil fuel drain, there is a need for developing a substitute energy source and putting such substitute energy into practical use.

It has been promoted to use biomass which does not affect on an amount of CO₂ emission in the atmosphere instead of fossil fuel. Biomass is an organic matter attributed to photosynthesis such as ligneous matters, grass plants, crops, and kitchen waste. By processing these types of biomass for fuel, it becomes possible to utilize biomass as an energy source or an industrial raw material. This contributes to an environmental preservation.
The biomass can be transformed into fuel by drying the biomass to fuel or by pressurizing biomass to a fuel pellet, or by carbonizing and drying to fuel in a solid form or liquid form. However, in the drying method, air ratio in the dried biomass remains large and apparent specific gravity is small, thus making it difficult to transport or store such fuel. This form of fuel is not very efficient for long distance transportation or storage.

A method of processing biomass into a fuel pellet is disclosed in Patent Literature 1 (JP 61-27435A). This method includes the steps of adjusting moisture content of comminuted fibrous particles to 16% to 28% by weight, and compressing the material in a die to dry into the fuel pellet.
A method of carbonizing the biomass (destructive distillation) is disclosed in Patent Literature 2 (JP2003-206490A). According to this method, in oxygen-depleted environment biomass is heated at 200 to 500°C, preferably 250 to 400°C, thus to produce a precursor of charred compact fuel of biomass.

However, according to the method disclosed in Patent Literature 1, biomass is processed into fuel by compacting, processed fuel pallet contains too much moisture and heat value is low, which is not suitable as fuel.
Moreover, according to the destructive distillation method disclosed in Patent Literature 2 and other references, processed biomass has more value as fuel than unprocessed biomass but still has low apparent specific gravity and has low calorific value in comparison to coal cokes. It also has lower hardness compared to coal cokes, which is not suitable to substitute for coal cokes.

Recently, as an alternative to coal cokes, biocokes are being studied based on Patent Literature 3.
The biocoke is produced by pressing and heating biomass raw material for a given period of time and then cooling the biomass raw material in a pressurized state. The pressurizing and heating conditions are set within the pressure and temperature range inducing thermal decomposition of hemicellulose or thermal hardening of cellulose and lignin within the pulverized biomass to induce the pulverized biomass to react at a low temperature while maintaining a structure of cellulose and lignin, thereby obtaining a semi-carbonized solid matter or pre-semi-carbonized solid matter. In this way, reaction mechanism is established and biocoke with high hardness and high density is produced. The pulverized biomass is mainly composed of lignin, cellulose and hemicellulose.

With the reaction mechanism under the above-identified condition, hemicellulose being a fiber component of the pulverized biomass is thermally decomposed and develops adhesion effect, and free water contained in the pulverized biomass induces lignin to react at a low temperature keeping its structure under the above-identified pressurizing and heating condition, which acts with consolidation effect synergistically, thereby producing biocoke with high hardness and high density. The thermal hardening reaction makes progress as reaction activity spots are induced amongst phenolic macromolecules contained in lignin or the like.

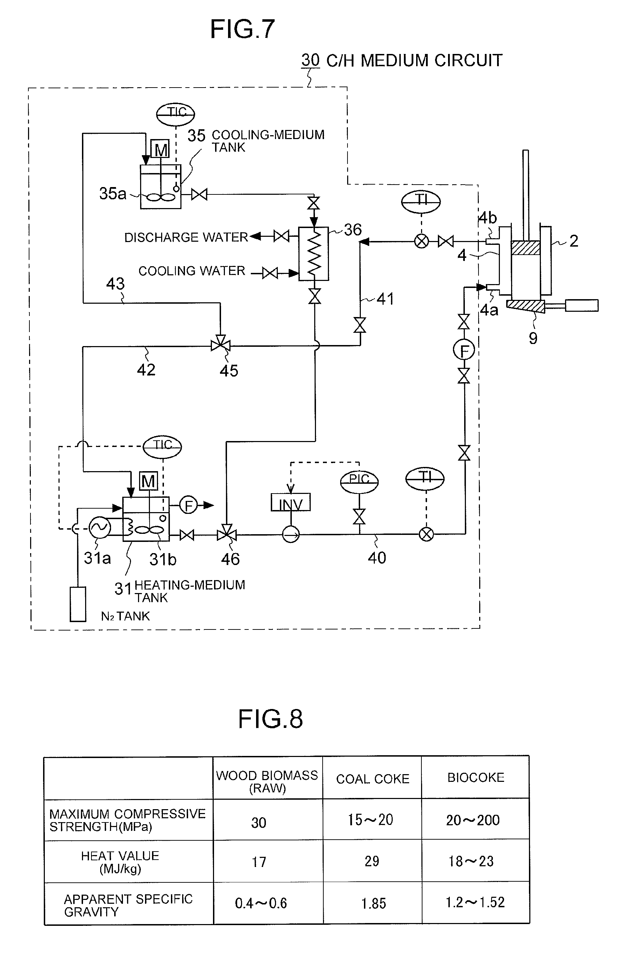

FIG.8 is a table comparing physical properties of biocokes with those of other fuels. The values shown in the table were obtained in experiments, thus should not limit the present invention.
As shown in the table, properties of biocoke are apparent specific gravity 1.2 to 1.52, maximum compressive strength 20 to 200MPa, heat value 18 to 23 MJ/kg, also showing excellence in hardness and combustibleness, while properties of wood biomass are apparent specific gravity 0.4 to 0.6, maximum compressive strength 30MPa, heat value 17MJ/kg, also showing inferior performance in hardness and combustibleness to biocoke. Properties of coal coke are apparent specific gravity 1.85, maximum compressive strength 15MPa, heat value 29MJ/kg but biocoke still shows superior performance in combustibleness and hardness.
Consequently, not only biocoke is a functional substitute of coal cokes but also biocoke posses a high value as a material.

### [Summary of Invention]

### [Technical Problem]

Bio-cokes are still in the experiment stage. Patent Literature 3 does not disclose a detailed structure of a pressurizing device, a heating device, a cooling device or the like and a control method thereof or how to produce biocokes in a short amount of time and efficiently.
Therefore, it is an object of the present invention to provide biocokes producing method and apparatus which can produce biocokes efficiently and in a short amount of time.

### [Solution to Problem]

In view of the above problems, a first aspect of the present invention is a method of producing biocokes in which pulverized biomass is fed and pressed in a cylindrical reaction container having a bottom part, the pulverized biomass in a substantially-packed state is pressure-formed while being heated in a temperature range and a pressure range to obtain a semi-carbonized solid matter or pre-semi-carbonized solid matter and then cooled to produce biocoke.

The method of producing the biocokes may include, but is not limited to:
a filling step comprising the substeps of:
   feeding the pulverized biomass to the reaction container; and then pressing the pulverized biomass in the reaction container by lowering a pressurizing member from above the reaction container at a pressure lower than the pressure range; and
a reaction step comprising the substeps of:
   pressurizing the pulverized biomass in the pressure range by increasing a pressure of the pressurizing member to the pressure range;
   heating the pulverized biomass by means of a heating device to the temperature range and keeping such state for a prescribed period of time to form a shaped matter of the pulverized biomass in the reaction container; and then
   cooling the shaped matter by switching from the heating device to a cooling device;
an ejecting step comprising the substeps of:
   reducing the pressure of the pressurizing member; and then
   releasing the bottom part of the reaction container to eject the shaped matter having been cooled.

In the first aspect of the present invention, in the filling step, the pressurizing member is operated first in the first pressure stage to press the pulverized biomass. Next in the reaction step, the pressure of the pressurizing member is increased and in synchronization with this, the heating device is actuated to heat and pressurize the pulverized biomass in an substantially-sealed state in the temperature and pressure range of obtaining the semi-carbonized or pre-semi carbonized solid matter. After keeping the pressurized and heated state for a prescribed period of time, the heating device is switched to the cooling device to cool the pulverized biomass while still maintaining the pressurized state, thereby producing the shaped matter of biocokes. In this manner, the pressurizing member and the heating device and the cooling device are controlled in conjunction. Thus, it is possible to produce biocokes in a short amount of time and efficiently. Further, the biomass of a small grain size is used and thus, bulk density is low. On the other hand, by using unprocessed biomass, it requires a large reaction container. However, in the first aspect of the present invention, the pulverized biomass is pressed at low pressure by the pressurizing member in the filling step and thus, it is possible to input a larger amount of the pulverized biomass. As a result, the reaction container can be downsized.

In the filling step, the pressure of the pressurizing member and an amount of the pulverized biomass filled in the reaction container may be detected in the substep of pressing the pulverized biomass, and the substep of feeding and the substep of pressing may be performed repeatedly until both of the detected pressure of the pressurizing member and the detected amount of the filled pulverized biomass are within a set pressure range and a set amount range of the filling step that are set in advance.
By this, it is possible to produce biocokes of the same size without measuring an input amount of the pulverized biomass before inputting to the reaction container, thereby enhancing a product value of the produced biocokes.

In the filling step, the amount of the filled pulverized biomass may be estimated by detecting a position of an upper end of the pulverized biomass fed in the reaction container using a position sensor or by detecting a period during the pressurizing member lowering from an initial position to the upper end of the pulverized biomass.
By this, it is possible to detect the amount of the pulverized biomass filled in the reaction container. Particularly, detection can be preferred with precision by using the position sensor, whereas the device can be produced at low cost by using the period of lowering the pressurizing member.

In the filling step, a number of times of lowering the pressurizing member may be counted by a counter in the filling step, and after completing the filling step, when the detected number of times is lower than an expected number of times of lowering the pressurizing member expected in a normal operation state, it may be determined that there is an abnormality in the substep of pressing.
In such a case that the number of times of lowering the pressurizing member is lower than the expected number of times expected in the normal operation state, it is assumed that the pressurizing member failed to lower properly due to occurrence of abnormality such as the pressurizing member getting stuck near the inlet of the reaction container. Therefore, it is possible to detect abnormalities during pressurizing the pulverized biomass in a simple manner by counting the number of times of lowering the pressurizing member.

In the above method of producing the biocokes, the heating device and the cooling device may be a cooling/heating medium circulating unit which introduces one of a heating medium and a cooling medium to an outer periphery of the reaction container so as to perform one of heating and cooling of the pulverized biomass, and in the reaction step, the heating medium may be circulated for a set period of time and then the heating medium may be replaced by the cooling medium.
In this manner, the cooling/heating medium circulating unit is used as the heating device and the cooling device. Thus, the pulverized biomass is heated or cooled rapidly and switching between heating and cooling of the pulverized biomass can be performed smoothly.

In the ejecting step, the shaped matter may be pushed and ejected from an open bottom of the reaction container by lowering the pressurizing member at a low pressure.
By pushing and ejecting the shaped matter of the pulverized biomass by means of the pressurizing member, the biocokes which is shaped in a consolidated manner within the reaction container can be easily ejected.

A second aspect of the present invention is an apparatus of producing biocokes which may include, but is not limited to:
a reaction container in which pulverized biomass is fed and pressed and which has a cylindrical shape with a bottom part;
a pressurizing member which pressurizes the pulverized biomass in the reaction container;
a heating device which heats the pulverized biomass within a temperature range and keeping such state for a prescribed period of time to form a shaped matter of the pulverized biomass in the reaction container, the pulverized biomass in a substantially-packed state being pressure-formed by the pressurizing member while being heated by the heating device within a temperature range and a pressure range in which the pulverized biomass is processed into one of a semi-carbonized solid matter and a pre-semi-carbonized solid matter so as to produce the shaped matter of the pulverized biomass;
a cooling device which cools the shaped matter of the pulverized biomass; and
a control unit which controls a pressure of the pressurizing member and controls switching between the heating device and the cooling device.
The control unit may control a pressure loaded on the pulverized biomass to a first pressure stage which is below the pressure range and a second pressure stage which is within the pressure range, the pulverized biomass being pressed during filling in the reacting container in the first pressure stage and being then pressurized within the pressure range in the second pressure stage, and the heating device may be controlled to operate at the second pressure stage of the pressurizing member for a prescribed period of time and then switched to the cooling device after the prescribed period of time.

The apparatus of producing the biocokes may also include:
a pressure detecting device which detects the pressure of the pressurizing member; and
a filling-amount detecting device which detects an amount of the pulverized biomass pressed in the reaction container.
The control unit may perform a control in the first pressure stage such that feeding of the pulverized biomass and the pressing of the pulverized biomass in the reaction container are performed repeatedly until the pressure detected by the pressure detecting device and the amount of the filled pulverized biomass detected by the filling-amount detecting device are within a set pressure range and a set amount range that are set in advance.

The filling-amount detecting device may be one of a position sensor which detects a position of an upper end the pulverized biomass fed in the reaction container and a device which detects a period during the pressurizing member lowering from an initial position to the upper end of the pulverized biomass so as to estimate the amount of the filled pulverized biomass based on one of the detected position and the detected period.
Further, the control unit may include a counter which counts a number of times of lowering the pressurizing member when switching the pressure stages of the pressurizing member, the control unit stopping the pressurizing member when it is determined that there is an abnormality during the pressing in such a case that the detected number of times is lower than an expected number of times of lowering the pressurizing member expected in a normal operation state.
Furthermore, the heating device and the cooling device may be a cooling/heating medium circulating unit which introduces one of a heating medium and a cooling medium to an outer periphery of the reaction container so as to perform one of heating and cooling of the pulverized biomass.

### [Advantageous Effects of Invention]

In the present invention, in the filling step, the pressurizing member is operated first in the first pressure stage to press the pulverized biomass. Next in the reaction step, the pressure of the pressurizing member is increased and in synchronization with this, the heating device is actuated to heat and pressurize the pulverized biomass in an substantially-sealed state within the temperature and pressure range of obtaining the semi-carbonized or pre-semi carbonized solid matter. After keeping the pressurized and heated state for a prescribed period of time, the heating device is switched to the cooling device to cool the pulverized biomass while still maintaining the pressurized state, thereby producing the shaped matter of biocokes. In this manner, the pressurizing member and the heating device and the cooling device are controlled in conjunction. Thus, it is possible to produce biocokes in a short amount of time and efficiently. Further, the biomass of a small grain size is used and thus, bulk density is low. On the other hand, by using unprocessed biomass, it requires a large reaction container. However, in the first aspect of the present invention, the pulverized biomass is pressed at low pressure by the pressurizing member in the filling step and thus, it is possible to input a larger amount of the pulverized biomass. As a result, the reaction container can be downsized.

In the filling step, the pressure of the pressurizing member and the amount of the pulverized biomass filled in the reaction container is detected in the substep of pressing the pulverized biomass, and the substep of feeding and the substep of pressing are performed repeatedly until both of the detected pressure of the pressurizing member and the detected amount of the filled pulverized biomass are within the set pressure range and the set amount range of the filling step that are set in advance. Thus, it is possible to produce biocokes of the same size without measuring an input amount of the pulverized biomass before inputting to the reaction container, thereby enhancing a product value of the produced biocokes.
Further, in the filling step, the amount of the filled pulverized biomass is estimated by detecting a position of an upper end of the pulverized biomass fed in the reaction container using a position sensor or by detecting a period during the pressurizing member lowering from an initial position to the upper end of the pulverized biomass. Thus, it is possible to easily detect the filling amount of the pulverized biomass.

Further, the cooling/heating medium circulating unit is used as the heating device and the cooling device. Thus, the pulverized biomass can be heated or cooled rapidly and switching between heating and cooling of the pulverized biomass can be performed smoothly.
In the ejecting step, the shaped matter is pushed and ejected from an open bottom of the reaction container by lowering the pressurizing member at a low pressure. Thus, it is possible to easily eject the biocokes which is shaped in a consolidated manner within the reaction container.

### [Brief Description of Drawings]

[FIG.1] FIG.1 is a cross-sectional view illustrating a structure of an apparatus of producing biocokes in relation to a preferred embodiment of the present invention.
[FIG.2] FIG.2 is a flow chart showing a process of producing biocokes in relation to a preferred embodiment of the present invention.
[FIG.3] FIG.3 is an explanatory view of an operation of the apparatus of producing biocokes in the filling step in a preferred embodiment of the present invention.
[FIG.4] FIG.4 is an explanatory view of an operation of the apparatus of producing biocokes in the reaction step in a preferred embodiment of the present invention.
[FIG.5] FIG.5 is an explanatory view of an operation of the apparatus of producing biocokes in the ejecting step in a preferred embodiment of the present invention.
[FIG.6] FIG.6 shows a hydraulic circuit of a hydraulic pressurization mechanism in relation to a preferred embodiment of the present invention.
[FIG.7] FIG.7 shows a system structure of the apparatus of producing biocokes equipped with a cooling/heating medium circuit in relation to a preferred embodiment of the present invention.
[FIG.8] FIG.8 is a comparative chart of properties of biocokes.

### [Description of Embodiments]

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.
In the present invention, biomass used as raw material for producing biocokes is organic matter attributed to photosynthesis. The biomass may be ligneous matters, grass plant, crops, agricultural matters, or the like. For example, biomass may be lumber waste, thinned lumber, pruned branches, plants, agricultural waste and kitchen waste such as coffee grinds and used tea leaves.

In a preferred embodiment of the present invention, pulverized biomass whose moisture content is adjusted to a prescribed percentage of moisture content as needed, is used as a raw material. The pulverized biomass may be biomass of a small grain size such as used tea leaves and coffee grinds without being processed or biomass of a large grain size such as lumber waste which has been pulverized to a prescribed grain size or smaller.
In a biocokes-producing apparatus of the preferred embodiment, pulverized biomass in a substantially packed state is pressure-formed while being heated in a temperature range and a pressure range to obtain a semi-carbonized solid matter or pre-semi-carbonized solid matter and after a certain period of time, cooled while keeping a state of pressurization. As a result, biocokes are produced. The above-described temperature and pressure ranges are set within such ranges as to obtain the semi-carbonized solid matter or the pre-semi-carbonized solid matter by inducing the pulverized biomass to react at a low temperature while inducing thermal decomposition of hemicellulose and maintaining a structure of cellulose and lignin within the pulverized biomass. Specifically, in the above-described temperature and pressure ranges, hemicellulose within the pulverized biomass is thermally decomposed and lignin is induced to thermally harden. The pulverized biomass is mainly composed of lignin, cellulose and hemicellulose.

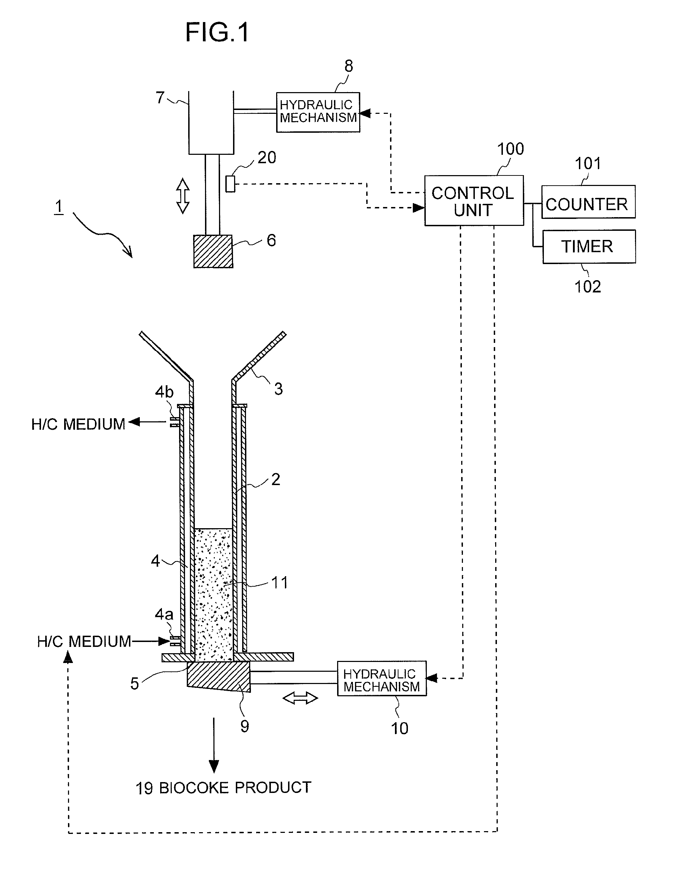

A basic structure of the biocokes-producing apparatus of the preferred embodiment is explained in reference to FIG.1. FIG.1 shows the biocokes-producing apparatus 1 having a cylindrical reaction container 2 to which the pulverized biomass 11 is inputted. At an upper part of the reaction container 2, a hopper 3 is provided to receive the pulverized biomass 11. At a lower part of the reaction container 2, an ejecting part 5 is provided to eject the biocokes having been shaped. The reaction container 2 is equipped with a heating device which heats a content of the reaction container 2 to a prescribed temperature and a cooling device which cools the content having been heated. The heating device and the cooling device may be one temperature-regulating device. In the preferred embodiment, the temperature-regulating device has a double tube structure configured such that a jacket is provided around the reaction container 2 to form a cooling/heating medium path 4 between an inner tube and an outer tube. A cooling medium or a heating medium (hereinafter referred to as cooling/heating medium) flows through the cooling/heating medium path 4 to perform heat exchange with the pulverized biomass 11 filled in the inner tube, thereby taking and receiving thermal energy. A medium inlet 4a is arranged on a lower side of the cooling/heating medium path 4 and a medium outlet 4b is arranged on an upper side of the cooling/heating medium path 4. The medium inlet 4a and the medium outlet 4b are connected to a cooling/heating medium circuit which is described later (see FIG.7). A mechanism which includes the cooling/heating medium path 4, the medium inlet 4a, the medium outlet 4b and the cooling/heating medium circuit and which regulates a temperature of the reaction container 2 by switching between the cooling medium and the heating medium is called a cooling/heating medium circulating mechanism.

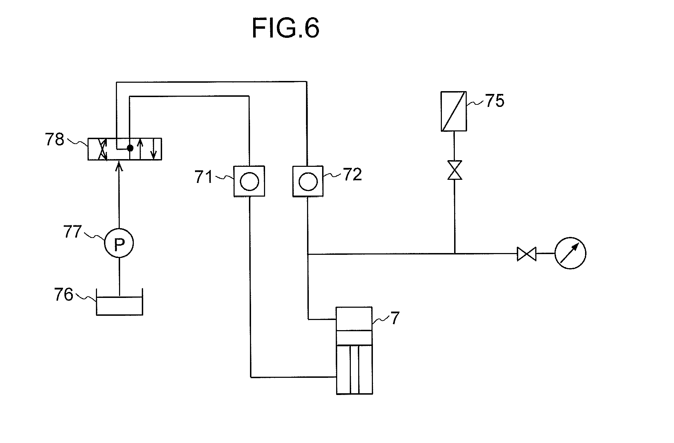

The ejecting part 5 has an opening that is the same in diameter as that of the reaction container. Below the ejecting part, an ejecting device is provided to open and close the ejecting part 4. The ejecting device has a bottom cover 9 to cover the ejecting part 5 and a hydraulic ejection mechanism 10 to control releasing of the ejecting part 5. After completing the reaction step within the reaction container 2, the ejecting device drives the hydraulic ejection mechanism 10 to slid the bottom cover 9 and release the ejecting part 5, thereby ejecting the biocokes from the cylinder 2. Over the reaction container 2, a pressurizing device is provided to pressurize the pulverized biomass 11 within the cylinder 2 to a prescribed pressure. The pressurizing device includes a pressurizing piston (a pressurizing member) 6 and a hydraulic pressurization mechanism 8 (see FIG.6). The pressurizing piston 6 is driven by a pressurizing cylinder 7 to reciprocate in the reaction container 2. The hydraulic pressurization mechanism 8 regulates a hydraulic pressure in the pressurizing cylinder 7. The pressurizing piston 6 and the pressurizing cylinder 7 are coaxially arranged with the reaction container. The pressurizing piston 6 lowers to near the bottom part of the reaction container 2. The pressurizing piston 6 is operable to maintain the pressurized state for a prescribed period of time. Further, a position sensor 20 may be provided to detect a position of the pressurizing piston 6 in a longitudinal direction based on an extending and retracting amount of the pressurizing piston 6.

The hydraulic pressurization mechanism 8, the hydraulic ejection mechanism 10 and the cooling/heating medium circulation mechanism are controlled by a control unit 100. The control unit 100 is constituted of a microcomputer which includes a CPU, a ROM, a RAM and an I/O interface. The control unit 100 further includes a counter 101 and a timer 102. The counter 101 counts a number of times of lowering the pressurizing piston 6 of the hydraulic pressurization mechanism 8. The timer 102 detects a period of time of a prescribed control.

FIG.6 shows an example of a hydraulic circuit of the hydraulic pressurization mechanism. The operating oil is pumped from a tank 76 by a pump 77 and supplied to the pressurizing cylinder 7 through an electromagnetic valve 78 which regulates a supply amount of the operating oil. In a hydraulic circuit between the electromagnetic valve 78 and the pressurizing cylinder 7, check valves 71 and 72 are provided. The pressure of the operating oil at the position is detected by a pressure sensor 75 as a back pressure and the detected back pressure is inputted to the control unit 100 as a pressure of the pressurizing piston 6. Based on the pressure detected by the pressure sensor 75, the control unit 100 controls the electromagnetic valve 78 to adjust a pressure of the pressurizing piston 6.
A pressure stage of the pressurizing piston 6 has at least first and second pressure stages. In the first pressure stage, the pulverized biomass 11 is pressed during filling thereof at a pressure below a pressure range in which the pulverized biomass 11 is processed into one of a semi-carbonized solid matter and a pre-semi-carbonized solid matter. In the second pressure stage, the pulverized biomass 11 having been pressed is pressurized within the above pressure range.

An example of the cooling/heating medium circuit 30 having the cooling/heating medium circulation mechanism is explained in reference to FIG.7. By using the cooling/heating medium circuit 30, the temperature-regulating device can obtain high thermal efficiency and safety. It is also possible to use a cooling/heating medium circuit of a different structure. In the cooling/heating medium circuit 30, silicon oil is used as the cooling and heating medium.
The medium inlet 4a and the medium outlet 4b of the reaction container 2 are connected to the cooling/heating medium circuit shown in the drawing. The cooling/heating medium circuit 30 is configured by combining a cooling medium circuit and a heating-medium circuit. The medium outlet 4b is connected to a medium ejection line 41 and branches into a heating-medium return line 42 and a cooling medium return line 43 at a three-way valve 45 disposed in the medium ejection line 41.
The heating-medium return line 42 is connected to a heating-medium tank 31. The heating-medium tank 31 is equipped with a heater 31a and a stirrer 31b to raise a temperature of the heating medium having been cooled. Preferably N₂ gas is supplied from a N₂ gas cylinder as needed and it is kept in an inert atmosphere inside the tank to ensure the safety. An outlet side of the heating-medium tank 31 is connected to a cooling/heating medium supply line 40 via a three-way valve 46.
With the above structure, during heating of the reaction container 2, the three-way valves 45 and 46 are controlled to circulate the heating medium toward the heating-medium tank 31 and thus, the heating-medium circuit is formed by the heating-medium tank 31, the cooling/heating medium supply line 40, the cooling/heating medium path 4 (the reaction container 2), the medium ejection line 41 and the heating-medium return line 42.

The cooling-medium return line 43 is connecting to a cooling/heating medium exchanger 36. The heating/cooling medium exchanger 36 cools the cooling medium by heat exchange with cooling water such as clean water.
Preferably, a cooling-medium tank 35 is provided on an upstream side of the cooling/heating medium exchanger 36 in the cooling-medium return line 43. The cooling-medium tank 35 is capable of cooling the cooling medium at least to a boiling temperature or below, preferably to 80°C or below. The cooling-medium tank 35 is preferably provided with a stirrer 35a. This suppresses a temperature change of the cooling-medium at the outlet of the cooling-medium tank 35, thereby enhancing the cooling performance.
With the above structure, during cooling of the reaction container 2, the three-way valves 45 and 46 are controlled to switch from the heating-medium tank side to the cooling-medium tank side to circulate the cooling medium to the heating-medium tank 31 and thus, the cooling-medium circuit is formed by the cooling-medium tank 35, the cooling/heating medium exchanger 36, the cooling/heating medium supply line 40, the cooling/heating medium path 4 (the reaction container 2), the medium ejection line 41 and the cooling-medium return line 43.
In this manner, the cooling/heating medium circulation mechanism with the cooling/heating medium circuit 30 is used as the heating device and the cooling device for heating and cooling the pulverized biomass 11 in the reaction container 2. Thus, the pulverized biomass 11 is heated or cooled rapidly and switching between heating and cooling of the pulverized biomass 11 can be performed smoothly.

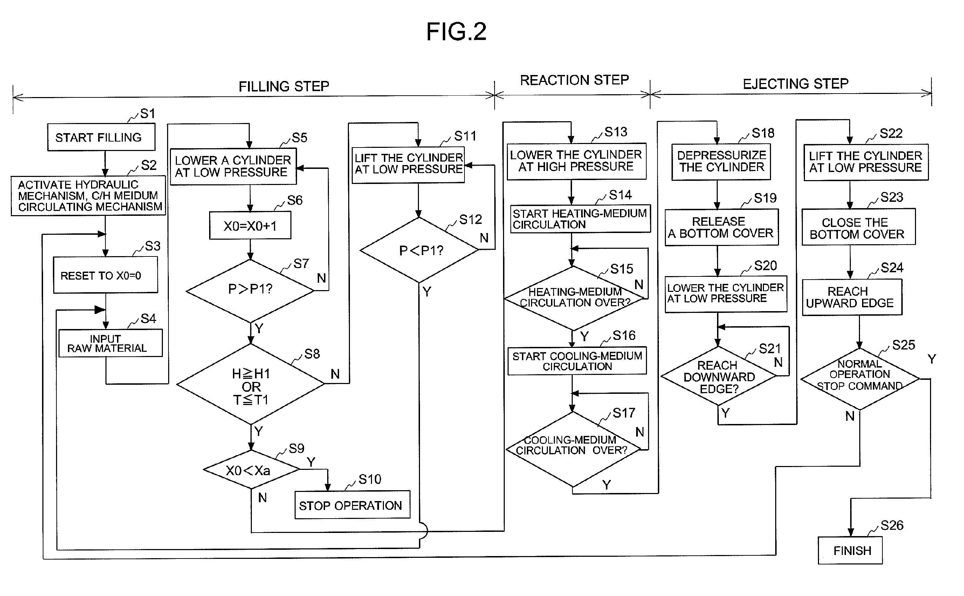

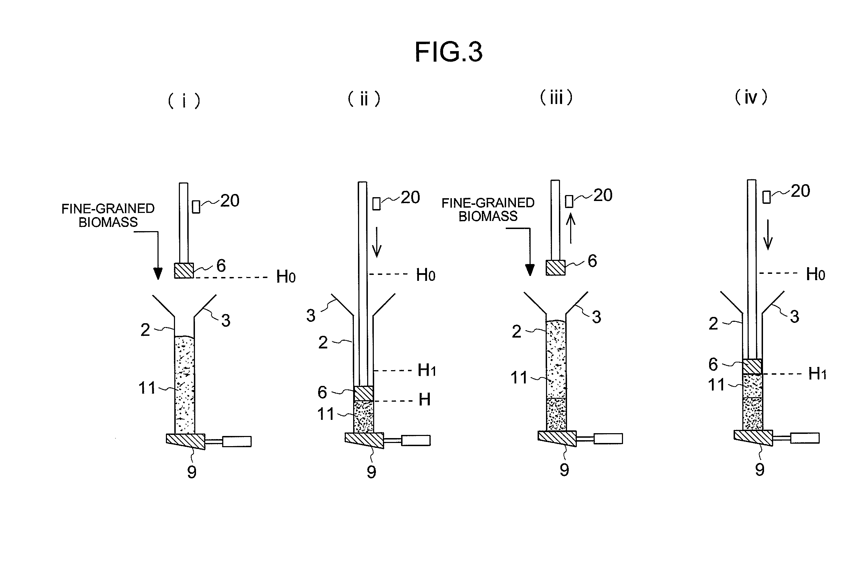

A process of producing biocokes in relation to the preferred embodiment is explained in reference to FIG.2.
A first step of the process is a filling step. In a step S1, the control unit 100 operates to start a filling operation. In a step S2, each hydraulic mechanism including the hydraulic pressurization mechanism 8 and the hydraulic ejection mechanism 10 is started as well as the cooling/heating medium circulation mechanism. In a step S3, the counter 101 is reset. Specifically, it is set to X=0, x being the number of times of filling the pulverized biomass 11. Meanwhile, the pressurizing piston 6 is arranged at an initial position H₀ above the reaction container 2 as shown in a stage (i) of FIG.3.
In a step S4, the pulverized biomass 11 as a raw material is inputted into the reaction container 2 from the hopper 3. Next, in a step S5, the pressurizing cylinder 7 is driven to lower at a low pressure by the hydraulic pressurization mechanism 8. The pressure of the pressurizing cylinder 7 when lowering at low pressure is set to a first pressure stage P₁ being lower than a pressure of the reaction step which is described later. Meanwhile, in a step S6, the number of filling is increased by +1 in the counter 101, i.e. X₀=X₀+1. When lowering the pressurizing cylinder 7 at low pressure, in a step S7, it is monitored in the control unit 100 whether or not the hydraulic pressure P of the pressurizing cylinder 7 is higher than the prescribed pressure P₁. In such a case that the period of pressurization detected by the timer 102 has passed beyond a preset prescribed period when the hydraulic pressure P of the pressurizing cylinder 7 is not higher than the prescribed pressure P₁, the process returns to the step S5 to drive the pressurizing cylinder 7 to lower. Preferably, the first stage pressure P₁ at which the pulverized biomass is pressed in the filling step is set to 14MPa and the preset prescribed period is set to ten seconds.

On the other hand, in such a case that the period of pressurization detected by the timer 102 has passed beyond the preset prescribed period when the hydraulic pressure P of the pressurizing cylinder 7 is higher than the prescribed pressure P₁, a filling amount of the pulverized biomass11 in the reaction container 2 is detected so that the pulverized biomass 11 is shaped into a target size.
The detection of the filling amount of the pulverized biomass 11 is performed as below.
The position sensor 20 detects a position H of an upper end of the pulverized biomass 11 fed in the reaction container 2. Then, it is determined whether or not the detected position H is not less than a preset filling amount H₁, i.e. H≥ H₁.

Alternatively, the filling amount of the pulverized biomass 11 may be estimated by detecting a period during the pressurizing member 6 lowering from the initial position H₁ to the upper end H of the pulverized biomass by means of the timer 102. In this case, the period during the pressurization member 6 lowering from the initial position H₁ to the upper end H is obtained in advance as a set period T₁. In a step S8, it is determined whether or not the detected period T is not greater than the set period T₁, T≤T₁.
In this manner, by using the position sensor or the period T during the pressurizing member 6 lowering from H₁ to H, it is possible to detect the filling amount of pulverized biomass 11. Particularly, detection can be preferred with precision by using the position sensor 20, whereas the device can be produced at low cost by using the period of lowering the pressurizing piston 6.

As shown in a stage (ii) of FIG.3, when the position H of the pulverized biomass 11 in the reaction container 2 has not reached the target position H₁ (H<H₁) or when the period T during the pressurizing cylinder 7 lowering from H₁ to H is longer than the set period T₁ (T>T₁), it is determined that the filling amount is insufficient and the pressurizing cylinder 7 is driven upward in a step S11. Next, in a step S12, it is determined whether or not the hydraulic pressure P of the pressurizing cylinder 7 is greater than the prescribed pressure P₁. When it is determined P> P₁, the process returns to the step S11 to drive the pressurizing cylinder 7 upward. In contrast, when it is determined P<P₁, the process returns to the step S4 to input the pulverized biomass 11 again as shown in a stage (iii) of FIG.3 and the filling step of the pressurizing cylinder 7 of S4 and beyond is repeated. Such repeated operation is stopped once the hydraulic pressure P of the pressurizing cylinder 7 becomes greater than the prescribed pressure P₁ and the filling amount H of the pulverized biomass 11 becomes not lower than the preset filling amount H₁.
In this manner, by performing the filling step, it is possible to produce biocokes of the same size without measuring an input amount of the pulverized biomass 11 before inputting to the reaction container 2. Further, the biomass of a small grain size is used and thus, bulk density is low. On the other hand, by using unprocessed biomass, the reaction container 2 must be made larger. In the preferred embodiment, in the filling step, the pulverized biomass is pressed at low pressure by the pressurizing piston 6, and thus, it is possible to input a larger amount of the pulverized biomass 11. As a result, the reaction container is downsized.

When it is determined in the step S8 that the filling amount of the pulverized biomass 11 has reached the target filling amount, the process advances to a step S9 to determine whether or not the number of filling the pulverized biomass detected by the counter 101,X₀ is less than the prescribed number of filling, Xa. In such a case that X0 is less than the prescribed number of filling, Xa, it is assumed that the pressurizing piston 6 failed to lower properly due to occurrence of abnormality such as the pressurizing piston 6 getting stuck near the inlet of the reaction container 2 and the device is halted in a step S10. In such a case that X₀ is not less than the prescribed number of filling, Xa, the process advances to the reaction step. In this manner, the number of filling the pulverized biomass detected by the counter 101,X₀ is counted by the counter 101 so as to detect abnormality during pressing the pulverized biomass 11 easily in real time.

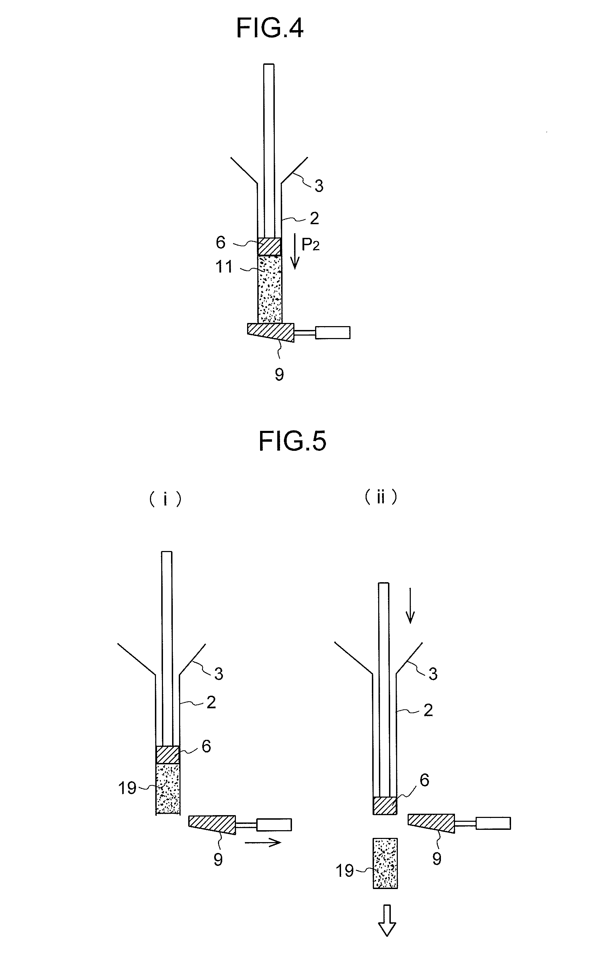

In the reaction step, in a step S13, the pressurizing cylinder 7 is driven downward at high pressure to lower the pressurizing piston 6 as shown in FIG.4. By this, the pulverized biomass 11 is pressurized at a prescribed pressure range P₂ (second pressure stage) which is required to induce the pulverized biomass 11 to react. In a step S14, the pulverized biomass 11 is heated in the prescribed temperature range by circulating the heating medium in the cooling/heating medium path 4 of the reaction container 2. The prescribed temperature range P₂ is set to the pressure and temperature range which induces thermal decomposition or thermal hardening of hemicellulose and lignin within the pulverized biomass. Preferably, the prescribed pressure range P₂ is set 8 to 25MPa and the temperature range is set to 115 to 230°C. The pulverized biomass 11 within the reaction container 2 is maintained in the above-described pressurized and heated state for a set period of time. For instance, when the radius of the cylinder is 50mm, the pulverized biomass 11 is maintained in the above-described pressurized and heated state for 10 to 20 minutes, whereas, when the radius of the cylinder is 150mm, the pulverized biomass 11 is maintained in the above-described pressurized and heated state for 30 to 60 minutes. In a step S15, it is determined by the timer 102 whether or not the heating-medium circulation period is over. Once the heating-medium circulation period is over, the cooling/heating medium circulation mechanism is switched from the heating medium to the cooling medium to start circulation of the cooling medium to the cooling/heating medium path 4 in a step S16. In a manner similar to the above case, it is determined in a step S17 whether or not the cooling-medium circulation period is over. Once the cooling-medium circulation period is over, the circulation of the cooling medium is stopped and the process advances to the ejecting step.

In the ejecting step, in a step S18, the pressurizing cylinder 7 is depressurized as shown in FIG.5 and in a step S19, the hydraulic ejection mechanism 10 is driven to slide the bottom cover 9 and release the ejecting part 5. Next, in a step S20, the pressurizing cylinder 7 is driven to lower at a low pressure to push out the biocokes 19 produced in the reaction container 2 as show in a stage(ii) of FIG.5. By this, the biocokes 19 which is shaped in a consolidated manner within the reaction container can be easily ejected.
Meanwhile, in a step S21, it is determined whether or not the position of the pressurizing piston 6 detected by the position sensor 20 has reached a downward limit of the pressurizing position 6. When the pressurizing piston 6 has reached the downward limit, the pressurizing cylinder 7 is driven to lift the pressurizing piston 6 at low pressure in a step S22 , the bottom cover 9 is closed in a step S23 and the pressurizing piston 6 is lifted to an upward end thereof in a step S24. Then, when a normal-operation stop command is inputted to the control unit 100 in a step S25, the operation is stopped in a step S26. When the normal-operation stop command is not inputted to the control unit 100 in the step S25, the process returns to the step S3 to reset the number of filling times and then the filling step of S4 and beyond is repeated

In the preferred embodiment, first in the filling step, the pressurizing piston 6 is operated in the first pressure stage to press the pulverized biomass 11. Next in the reaction step, the pressure of the pressurizing piston 6 is increased in synchronization with feeding of the heating medium to the cooling/heating medium path 4 to pressurize and heat the pulverized biomass in the reaction container in the temperature and pressure range to obtain the semi-carbonized or pre-semi carbonized solid matter. After keeping the pressurized and heated state for a prescribed period of time, the cooling/heating medium path 4 is switched from the heating medium to the cooling medium to cool the pulverized biomass while still maintaining the pressurized state, thereby producing the shaped matter of biocokes 19. In this manner, the hydraulic pressurization mechanism 8, the hydraulic ejection mechanism 10 and the cooling/heating medium circulation mechanism are controlled in conjunction by the control unit 100. Thus, it is possible to produce biocokes in a short amount of time and efficiently.

### [Industrial Applicability]

With the biocokes-producing apparatus in relation to the preferred embodiment, it is possible to efficiently produce biocokes having high hardness and high density which can be used as an alternative to coal cokes. Further, the biocokes produced according to the preferred embodiment can be used as a heat source, a reducing agent or the like in a Cupola furnace or a blast furnace for a casing manufacture or an iron manufacture, and can be used as a burning fuel such as a power boiler fuel and slaked lime, and also as a material utilizing the high compressive strength of the biocoke.

## Claims

1. A method of producing biocokes in which pulverized biomass is fed and pressed in a cylindrical reaction container having a bottom part, the pulverized biomass in a substantially-packed state is pressure-formed while being heated in a temperature range and a pressure range to obtain a semi-carbonized solid matter or pre-semi-carbonized solid matter and then cooled to produce biocoke, the method comprising:
a filling step comprising the substeps of:
feeding the pulverized biomass to the reaction container; and then pressing the pulverized biomass in the reaction container by lowering a pressurizing member from above the reaction container at a pressure lower than the pressure range;
a reaction step comprising the substeps of:
pressurizing the pulverized biomass in the pressure range by increasing a pressure of the pressurizing member to the pressure range;
heating the pulverized biomass by means of a heating device to the temperature range and keeping such state for a prescribed period of time to form a shaped matter of the pulverized biomass in the reaction container; and then cooling the shaped matter by switching from the heating device to a cooling device; and
an ejecting step comprising the substeps of:
reducing the pressure of the pressurizing member; and then releasing the bottom part of the reaction container to eject the shaped matter having been cooled.

2. The method of producing the biocokes according to claim 1,
wherein in the filling step, the pressure of the pressurizing member and an amount of the pulverized biomass filled in the reaction container are detected in the substep of pressing the pulverized biomass, and the substep of feeding and the substep of pressing are performed repeatedly until both of the detected pressure of the pressurizing member and the detected amount of the filled pulverized biomass are within a set pressure range and a set amount range of the filling step that are set in advance.

3. The method of producing the biocokes according to claim 2,
wherein in the filling step, the amount of the filled pulverized biomass is estimated by detecting a position of an upper end of the pulverized biomass fed in the reaction container using a position sensor or by detecting a period during the pressurizing member lowering from an initial position to the upper end of the pulverized biomass.

4. The method of producing the biocokes according to claim 1 or 2,
wherein in the filling step, a number of times of lowering the pressurizing member is counted by a counter in the filling step, and after completing the filling step, when the detected number of times is lower than an expected number of times of lowering the pressurizing member expected in a normal operation state, it is determined that there is an abnormality in the substep of pressing.

5. The method of producing the biocokes according to claim 1,
wherein the heating device and the cooling device are a cooling/heating medium circulating unit which introduces one of a heating medium and a cooling medium to an outer periphery of the reaction container so as to perform one of heating and cooling of the pulverized biomass, and
wherein, in the reaction step, the heating medium is circulated for a set period of time and then the heating medium is replaced by the cooling medium.

6. The method of producing the biocokes according to claim 1,
wherein, in the ejecting step, the shaped matter is pushed and ejected from an open bottom of the reaction container by lowering the pressurizing member at a low pressure.

7. An apparatus of producing biocokes comprising:
a reaction container in which pulverized biomass is fed and pressed and which has a cylindrical shape with a bottom part;
a pressurizing member which pressurizes the pulverized biomass in the reaction container;
a heating device which heats the pulverized biomass within a temperature range and keeping such state for a prescribed period of time to form a shaped matter of the pulverized biomass in the reaction container, the pulverized biomass in a substantially-packed state being pressure-formed by the pressurizing member while being heated by the heating device within a temperature range and a pressure range in which the pulverized biomass is processed into one of a semi-carbonized solid matter and a pre-semi-carbonized solid matter so as to produce the shaped matter of the pulverized biomass;
a cooling device which cools the shaped matter of the pulverized biomass; and
a control unit which controls a pressure of the pressurizing member and controls switching between the heating device and the cooling device,
wherein the control unit controls a pressure loaded on the pulverized biomass to a first pressure stage which is below the pressure range and a second pressure stage which is within the pressure range, the pulverized biomass being pressed during filling in the reacting container in the first pressure stage and being then pressurized within the pressure range in the second pressure stage, and
wherein the heating device is controlled to operate at the second pressure stage of the pressurizing member for a prescribed period of time and then switched to the cooling device after the prescribed period of time.

8. The apparatus of producing the biocokes according to claim 7, further comprising:
a pressure detecting device which detects the pressure of the pressurizing member; and
a filling-amount detecting device which detects an amount of the pulverized biomass pressed in the reaction container,
wherein the control unit performs a control in the first pressure stage such that feeding of the pulverized biomass and the pressing of the pulverized biomass in the reaction container are performed repeatedly until the pressure detected by the pressure detecting device and the amount of the filled pulverized biomass detected by the filling-amount detecting device are within a set pressure range and a set amount range that are set in advance.

9. The apparatus of producing the biocokes according to claim 8,
wherein the filling-amount detecting device is one of a position sensor which detects a position of an upper end the pulverized biomass fed in the reaction container and a device which detects a period during the pressurizing member lowering from an initial position to the upper end of the pulverized biomass so as to estimate the amount of the filled pulverized biomass based on one of the detected position and the detected period.

10. The device of producing the biocokes according to claim 7 or 8,
wherein the control unit comprises a counter which counts a number of times of lowering the pressurizing member when switching the pressure stages of the pressurizing member, the control unit stopping the pressurizing member when it is determined that there is an abnormality during the pressing in such a case that the detected number of times is lower than an expected number of times of lowering the pressurizing member expected in a normal operation state.

11. The device of producing the biocokes according to claim 7,
wherein the heating device and the cooling device are a cooling/heating medium circulating unit which introduces one of a heating medium and a cooling medium to an outer periphery of the reaction container so as to perform one of heating and cooling of the pulverized biomass.
